(19) 

Europäisches
Patentamt

European
Patent Office

Office européen
des brevets

(11) **EP 4 475 454 A1**

(12) **DEMANDE DE BREVET EUROPEEN**

(43) Date de publication:
**11.12.2024  Bulletin 2024/50**

(21) Numéro de dépôt: **24180134.9**

(22) Date de dépôt: **05.06.2024**

(51) Classification Internationale des Brevets (IPC):
***H04B 7/08*** *(2006.01)*

(52) Classification Coopérative des Brevets (CPC):
**H04B 7/0817; H04B 7/0822**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **09.06.2023  FR 2305833**

(71) Demandeur: **Sagemcom Broadband SAS
92270 Bois-Colombes (FR)**

(72) Inventeur: **MAPAR, Samira
92270 BOIS-COLOMBES (FR)**

(74) Mandataire: **Cabinet Le Guen Maillet
3, impasse de la Vigie
CS 71840
35418 Saint-Malo Cedex (FR)**

(54) **PROCEDE DE GESTION D'UNE INTERFACE RADIO D'UN DISPOSITIF DE COMMUNICATION**

(57)    L'invention concerne un procédé et un dispositif de gestion d'une interface radio d'un dispositif de communication, l'interface radio comportant une pluralité d'antennes aptes à l'émission et la réception de trames de données, à chaque antenne étant associé un module frontal, chaque module frontal comportant une chaîne d'émission et une chaîne de réception de trames de données. Selon l'invention :
- on obtient (E403), pour chaque antenne et le module frontal associé, une mesure du niveau de puissance reçue,
- on compare (E406) chaque niveau de puissance obtenu avec un seuil de décision déterminé à partir d'au moins une partie des mesures de niveaux de puissance de signaux reçues,
- si le niveau de puissance du signal reçu pour une antenne et le module frontal associé est inférieur au seuil de décision, on désactive (E408) le module frontal pour la transmission d'une trame de données.

Fig. 4

EP 4 475 454 A1

Processed by Luminess, 75001 PARIS (FR)

**Description**

DOMAINE TECHNIQUE

La présente invention concerne un procédé de gestion d'une interface radio d'un dispositif de communication comportant plusieurs antennes.

ETAT DE LA TECHNIQUE ANTERIEURE

Dans les réseaux de communication radio, tels que par exemple les réseaux de communication utilisant la technologie Wi-Fi, les interfaces radio des dispositifs de communication disposent respectivement d'un ensemble d'antennes fonctionnellement bidirectionnelles pour l'émission et la réception de données. L'utilisation d'une pluralité d'antennes est connue sous l'acronyme MIMO (pour Multiple-Input Multiple-Output en anglais), (« entrées multiples, sorties multiples » en français).

C'est une technique de multiplexage utilisée dans les réseaux sans fil comme les réseaux mobiles et Wi-Fi qui permet des transferts de données à plus longue portée et avec un débit plus élevé qu'avec une seule antenne.

Les composants mettant en oeuvre la technologie MIMO se basent sur la caractérisation quasi-temps réel du canal de propagation au moyen, par exemple, d'indicateurs d'erreur en retour, pour ajuster les paramètres de transmission (puissance, type de modulation, codage de canal, ...) en vue d'obtenir le meilleur débit à destination d'un récepteur. Cette opération est effectuée conjointement par l'émetteur et le récepteur.

La technologie MIMO, par sa structure, permet à chacune des antennes d'un récepteur de recevoir une combinaison des signaux provenant de chacune des antennes d'émission utilisée dans l'émetteur.

Selon les conditions de propagation, le signal transmis par une ou plusieurs antennes peut être très fortement altéré et il arrive que le signal reçu par au moins une antenne du dispositif de communication destinataire ne représente qu'une infime portion du signal utile total perçu par chacune des antennes du dispositif de communication destinataire. A chaque antenne est associée une pluralité de composants électroniques permettant l'émission et la réception des signaux radio. Ces composants électroniques sont souvent compris dans un module appelé module frontal. Un module frontal comporte, par exemple, au moins un amplificateur de puissance, au moins un amplificateur à faible bruit, au moins un multiplexeur ou un commutateur. Les composants du module frontal sont consommateurs en énergie électrique. Lorsqu'un signal reçu par au moins une antenne est fortement altéré, il n'intervient pas significativement dans la reconstruction du signal de données par le dispositif de communication alors que la transmission dudit signal consomme de l'énergie électrique.

Il est notamment souhaitable de fournir une solution qui permette d'optimiser la consommation en énergie électrique des dispositifs de communication utilisant la technologie MIMO.

EXPOSE

Il est proposé un procédé de gestion d'une interface radio d'un dispositif de communication, l'interface radio comportant une pluralité d'antennes aptes à l'émission et à la réception de trames de données, à chaque antenne étant associé un module frontal, chaque module frontal comportant une chaîne d'émission et une chaîne de réception de trames de données, caractérisé en ce que le procédé comporte les étapes de :

- obtention, pour chaque antenne et le module frontal associé, d'une mesure du niveau de puissance du signal reçu,
- comparaison de chaque niveau de puissance obtenu avec un seuil de décision déterminé à partir d'au moins une partie des mesures de niveaux de puissance des signaux reçues,
- si le niveau de puissance du signal reçu pour une antenne et le module frontal associé est inférieur au seuil de décision, désactivation du module frontal pour la transmission d'une trame de données.

Un ou plusieurs modes de réalisation concernent aussi un dispositif de gestion d'une interface radio d'un dispositif de communication, l'interface radio comportant une pluralité d'antennes aptes à l'émission et la réception de trames de données, à chaque antenne étant associé un module frontal, chaque module frontal comportant une chaîne d'émission et une chaîne de réception de trames de données, caractérisé en ce que le dispositif de gestion comporte :

- des moyens d'obtention, pour chaque antenne et le module frontal associé, d'une mesure du niveau de puissance du signal reçu,
- des moyens de comparaison de chaque niveau de puissance obtenu avec un seuil de décision déterminé à partir d'au moins une partie des mesures de niveaux de puissance des signaux reçues,
- des moyens de désactivation d'un module frontal pour la transmission d'une trame de données si le niveau de puissance du signal reçu pour une antenne et le module frontal associé est inférieur au seuil de décision.

Ainsi, la consommation en énergie électrique des dispositifs de communication utilisant la technologie MIMO est optimisée sans pénaliser la qualité de réception des trames de données.

Selon un mode de réalisation particulier, le seuil de décision est déterminé à partir d'une moyenne des mesures de niveaux de puissance de signaux reçus minorée d'une valeur prédéfinie.

Selon un mode de réalisation particulier, la valeur prédéfinie est dépendante du type de modulation utilisé pour le transfert d'une trame de données.

Selon un mode de réalisation particulier, la partie des mesures de niveaux de puissance des signaux reçus pour déterminer le seuil de décision comprend un nombre prédéfini de mesures de niveaux de puissance de signaux reçus les plus élevées parmi les mesures de niveaux de puissance des signaux reçues.

Selon un mode de réalisation particulier, le nombre prédéfini est au moins égal à 1.

Selon un mode de réalisation particulier, la désactivation de modules frontaux est limitée au nombre total de modules frontaux minoré de un.

Selon un mode de réalisation particulier, le nombre maximum de modules frontaux pouvant être désactivés est dépendant du type de modulation utilisé pour la transmission de trames de données.

Selon un mode de réalisation particulier, le procédé est exécuté préalablement à la transmission de chaque trame de données pendant une durée prédéterminée.

Il est également proposé un programme d'ordinateur, qui peut être stocké sur un support et/ou téléchargé d'un réseau de communication, afin d'être lu par un processeur. Ce programme d'ordinateur comprend des instructions pour implémenter le procédé réalisé par le dispositif de gestion tel que mentionné ci-dessus, lorsque ledit programme est exécuté par le processeur. Un mode de réalisation concerne également un support de stockage d'informations stockant un tel programme d'ordinateur.

BREVE DESCRIPTION DES DESSINS

Les caractéristiques mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un agencement de réseau de communication sans fil selon un mode de réalisation ;
[Fig. 2] illustre schématiquement un mode de réalisation des modules frontaux d'une interface radio comprise dans un dispositif de communication ;
[Fig. 3] illustre schématiquement un exemple d'agencement matériel d'un dispositif de télécommunication ;
[Fig. 4] illustre schématiquement un exemple d'algorithme exécuté par un dispositif de communication.

EXPOSE DETAILLE DE MODES DE REALISATION

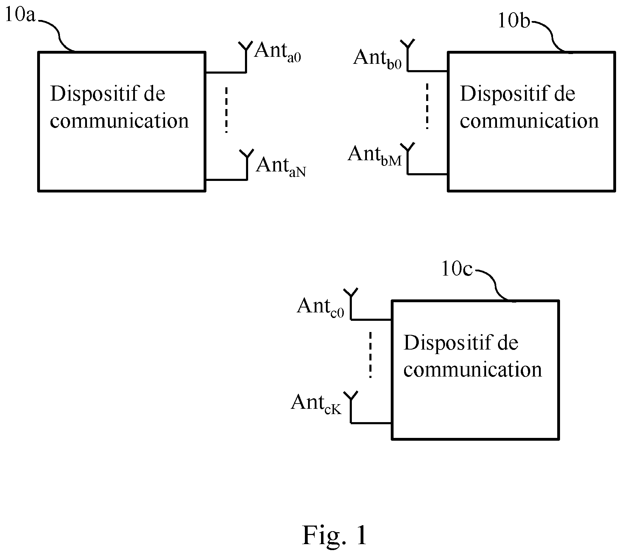

La **Fig.** 1 illustre schématiquement un agencement de réseau de communication sans fil selon un mode de réalisation.

Dans l'exemple de la Fig. 1, trois dispositifs de communication 10a, 10b et 10c sont représentés.

Bien entendu, les différents modes de réalisation sont applicables pour un nombre plus ou moins important de dispositifs de communication.

Le réseau de communication est par exemple et non limitativement un réseau de communication utilisant par exemple la technologie Wi-Fi ou un réseau de communication de téléphonie mobile.

Les dispositifs de communication 10a, 10b et 10c sont par exemple des points d'accès d'un réseau de communication domestique, des stations, des passerelles ou des répéteurs Wi-Fi.

Le dispositif de communication 10a comporte N+1 antennes notées $Ant_{a0}$ à $Ant_{aN}$, le dispositif de communication 10b comporte M+1 antennes notées $Ant_{b0}$ à $Ant_{bM}$ et le dispositif de communication 10c comporte K + 1 antennes notées $Ant_{c0}$ à $Ant_{cK}$ où N, M et K sont des nombres entiers supérieurs ou égaux à 1.

Par exemple, si N et M sont égaux à 1, le dispositif de communication 10a est apte à transférer des données à destination du dispositif de communication 10b par l'intermédiaire d'un canal de propagation entre l'antenne $Ant_{a0}$ et l'antenne $Ant_{b0}$ noté $C_{a0b0}$, d'un canal de propagation entre l'antenne $Ant_{a1}$ et l'antenne $Ant_{b0}$ noté $C_{a1b0}$, d'un canal de propagation entre l'antenne $Ant_{a0}$ et l'antenne $Ant_{b1}$ noté $C_{a0b1}$, et d'un canal de propagation entre l'antenne $Ant_{a1}$ et l'antenne $Ant_{b1}$ noté $C_{a1b1}$.

$$\begin{bmatrix} B0 \\ B1 \end{bmatrix} = \begin{bmatrix} C_{a0b0} & C_{a1b0} \\ C_{a0b1} & C_{a1b1} \end{bmatrix} \times \begin{bmatrix} A0 \\ A1 \end{bmatrix} = C \times A \quad \text{où } C = \begin{bmatrix} C_{a0b0} & C_{a1b0} \\ C_{a0b1} & C_{a1b1} \end{bmatrix}, A = \begin{bmatrix} A0 \\ A1 \end{bmatrix}, B = \begin{bmatrix} B0 \\ B1 \end{bmatrix}$$

B0 étant le signal reçu par l'antenne $Ant_{b0}$ du dispositif de communication 10b et B1 le signal reçu par l'antenne $Ant_{b1}$ du dispositif de communication 10b, A0 est le signal émis par l'antenne $Ant_{a0}$ et A1 le signal émis par l'antenne $Ant_{a1}$.

Dans un milieu de propagation classique avec des obstacles tels que des éléments passifs, il est admis d'appliquer le principe de réciprocité. Ainsi, les canaux de propagation entre chaque couple d'antenne des dispositifs de communication 10a et 10b ont les mêmes caractéristiques quel que soit le sens d'émission et de réception. Chaque antenne et son module frontal associé du dispositif de communication 10a perçoit le dispositif de communication 10b comme une source d'émission unique. Le nombre et les caractéristiques de chaque antenne et de son module frontal associé du dispositif de communication 10b ne sont pas distingués par le dispositif de communication 10a. Le même principe est applicable au dispositif de communication 10b.

Une communication sans fil selon le mode MIMO entre deux dispositifs de communication, par exemple 10a et 10b, met en oeuvre de part et d'autre une pluralité de chaînes de transmission et une pluralité de chaînes de réception.

Les communications du dispositif de communication 10a vers le dispositif de communication 10b utilisent le même canal fréquentiel, ou des canaux fréquentiels proches dans une même bande de fréquences, et parcourent le même espace aérien à des instants différents mais très rapprochés (par exemple quelques ms). Il est donc considéré que le canal de communication est réciproque.

En général, une communication est bidirectionnelle car la transmission d'une trame de données par un dispositif de communication est suivie de la transmission en réponse d'un acquittement par le dispositif de communication destinataire. Par défaut, les transmissions et réceptions de part et d'autre se font en mettant en oeuvre l'ensemble des chaînes de transmission et de réception.

La combinaison dans le récepteur des informations en provenance des différentes antennes, selon les principes du MIMO, permet de reconstruire le flux de données transmis, les données ayant été configurées selon les principes du MIMO par l'émetteur pour être transmises via ses antennes.

La capacité du récepteur à reconstruire les données d'entrée est très dépendante de la qualité du signal qu'il reçoit de chacune de ses chaînes de réception. La qualité de ce signal est elle-même dépendante du rapport signal sur bruit du signal arrivant à l'antenne associée à la chaîne de réception.

Un signal reçu avec une faible amplitude, ou un faible rapport signal sur bruit, est donc, de fait, moins contributeur à la reconstruction du flux de données qu'un signal reçu avec un forte amplitude ou un fort rapport signal sur bruit.

Il est notable qu'une chaîne de réception montrant une faible amplitude, ou un faible rapport signal à bruit, de signal reçu par rapport à l'amplitude ou rapport signal à bruit des autres chaînes de réception, met en évidence une piètre performance du canal de propagation qui la concerne.

Étant donné le phénomène de réciprocité du canal de propagation, il est notable également qu'un signal transmis par une chaîne de transmission utilisant la même antenne sera altéré de la même manière lorsqu'il arrivera sur les antennes du récepteur distant.

Le procédé décrit ci-après permet de juger du niveau de contribution de chacun des canaux de propagation sur la base d'un niveau reçu, et d'en déduire la pertinence d'activation de la chaîne de transmission correspondante.

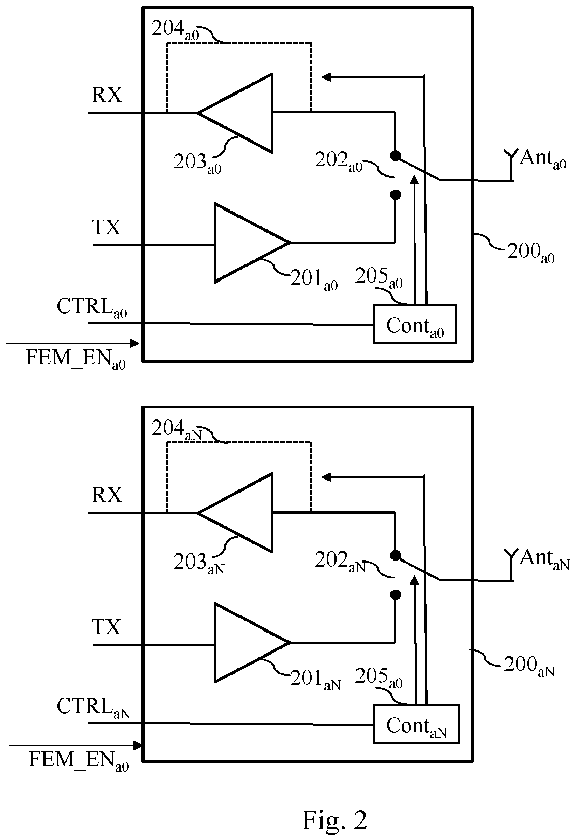

La Fig. 2 illustre schématiquement un mode de réalisation des modules frontaux d'une interface radio comprise dans un dispositif de communication.

Dans l'exemple de la Fig. 2, les modules frontaux de l'interface de communication radio comprise dans le dispositif de communication 10a sont représentés.

Le module frontal $200_{a0}$ est associé à l'antenne $Ant_{a0}$ et le module frontal $200_{aN}$ est associé à l'antenne $Ant_{aN}$.

Le module frontal $200_{a0}$ comporte un amplificateur de puissance $201_{a0}$, un amplificateur faible bruit $203_{a0}$, un commutateur $202_{a0}$, un circuit de commande $Cont_{a0}$ $205_{a0}$ et un circuit de contournement $204_{a0}$ de l'amplificateur faible bruit $203_{a0}$.

L'amplificateur faible bruit $203_{a0}$, le commutateur $202_{a0}$ et le circuit de contournement $204_{a0}$ de l'amplificateur faible bruit $203_{a0}$ forment une chaîne de réception.

L'amplificateur de puissance $201_{a0}$ et le commutateur $202_{a0}$ forment une chaîne d'émission.

Le module frontal $200_{a0}$ peut aussi comporter au moins un filtre non représenté en Fig. 2.

Lorsque le dispositif de communication 10a émet une trame de données, celle-ci est modulée et transmise à l'amplificateur de puissance $201_{a0}$ par la liaison notée TX. Au moins un signal de contrôle $CTRL_{a0}$ indique au circuit de commande $Cont_{a0}$ $205_{a0}$ qu'il faut positionner le commutateur $202_{a0}$ pour que le signal en sortie de l'amplificateur de puissance $201_{a0}$ soit dirigé vers l'antenne $Ant_{a0}$.

Lorsque le dispositif de communication 10a reçoit une trame de données, le signal reçu par l'antenne $Ant_{a0}$ est transmis à l'amplificateur faible bruit $203_{a0}$ pour être amplifié et transmis à l'interface radio 305 du dispositif de communication 10a pour démodulation et traitement par l'intermédiaire de la liaison RX . Eventuellement, si l'amplitude du signal reçu est supérieure à un seuil prédéterminé, le signal reçu par l'antenne $Ant_{a0}$ est transmis via le circuit de contournement $204_{a0}$ de l'amplificateur faible bruit $203_{a0}$.

Un signal noté $FEM\_EN_{a0}$ permet d'activer ou non la fourniture en énergie électrique du module frontal $200_{a0}$.

Le module frontal $200_{aN}$ comporte un amplificateur de puissance $201_{aN}$, un amplificateur faible bruit $203_{aN}$, un commutateur $202_{aN}$, un circuit de commande $Cont_{aN}$ $205_{aN}$ et un circuit de contournement $204_{aN}$ de l'amplificateur faible bruit $203_{aN}$.

L'amplificateur faible bruit $203_{aN}$, le commutateur $202_{aN}$ et le circuit de contournement $204_{aN}$ de l'amplificateur faible bruit $203_{aN}$ forment une chaîne de réception.

L'amplificateur de puissance $201_{aN}$ et le commutateur $202_{aN}$ forment une chaîne d'émission.

Le module frontal $200_{aN}$ peut aussi comporter au moins un filtre non représenté en Fig. 2.

Lorsque le dispositif de communication 10a émet une trame de données, celle-ci est modulée et transmise à l'amplificateur de puissance $201_{aN}$ par la liaison notée TX. Au moins un signal de contrôle $CTRL_{aN}$ indique au circuit de commande $205_{aN}$ qu'il faut positionner le commutateur $202_{aN}$ pour que le signal en sortie de l'amplificateur de puissance $201_{aN}$ soit dirigé vers l'antenne $Ant_{aN}$.

Lorsque le dispositif de communication 10a reçoit une trame de données, le signal reçu par l'antenne $Ant_{aN}$ est transmis à l'amplificateur faible bruit $203_{aN}$ pour être amplifié et transmis à l'interface radio 305 du dispositif de communication 10a pour démodulation et traitement par l'intermédiaire de la liaison RX . Eventuellement, si l'amplitude du signal reçu est supérieure à un seuil prédéterminé, le signal reçu par l'antenne $Ant_{aN}$ est transmis au circuit de contournement $204_{aN}$ de l'amplificateur faible bruit $203_{aN}$.

Un signal noté $FEM\_EN_{aN}$ permet d'activer ou non la fourniture en énergie électrique du module frontal $200_{aN}$.

Lorsqu'un module frontal $200_I$, avec I=0 à N, est activé, le module frontal $200_I$ est alimenté en énergie électrique et permet la réception et la transmission de trames de données par l'intermédiaire du module frontal $200_I$ et de l'antenne à laquelle le module frontal est associé. Lorsqu'un module frontal $200_I$ est désactivé, le module frontal $200_I$ n'est pas alimenté en énergie électrique et ne permet pas la réception et la transmission de trames de données par l'intermédiaire du module frontal $200_I$ et de l'antenne à laquelle le module frontal est associé $200_I$.

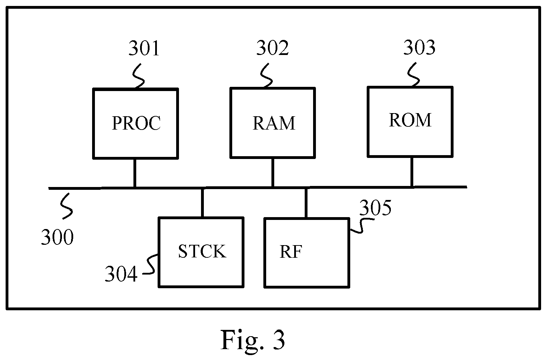

La Fig. 3 illustre schématiquement un exemple d'agencement matériel d'un dispositif de télécommunication.

L'exemple d'agencement matériel présenté comporte, reliés par un bus de communication 300 : un processeur PROC 301 ; une mémoire vive RAM (« Random Access Memory » en anglais) 302 ; une mémoire morte ROM (« Read Only Memory » en anglais) 303 ou une mémoire Flash ; une unité de stockage ou un lecteur de support de stockage (« STCK »), tel qu'un lecteur de cartes SD (« Secure Digital » en anglais) 304 ou un disque dur HDD (« Hard Disk Drive » en anglais) ; et une interface radio RF 305.

Le processeur CPU 301 est capable d'exécuter des instructions chargées dans la mémoire RAM 302 à partir de la mémoire ROM 303, d'une mémoire externe (telle qu'une carte SD), d'un support de stockage (tel que le disque dur HDD), ou d'un réseau de communication. Lors de la mise sous tension du dispositif de communication, le processeur CPU 301 est capable de lire dans la mémoire RAM 302 des instructions et de les exécuter. Ces instructions forment un programme d'ordinateur causant la mise en oeuvre, par le processeur CPU 301, de tout ou partie des comportements, algorithmes et étapes décrits ici.

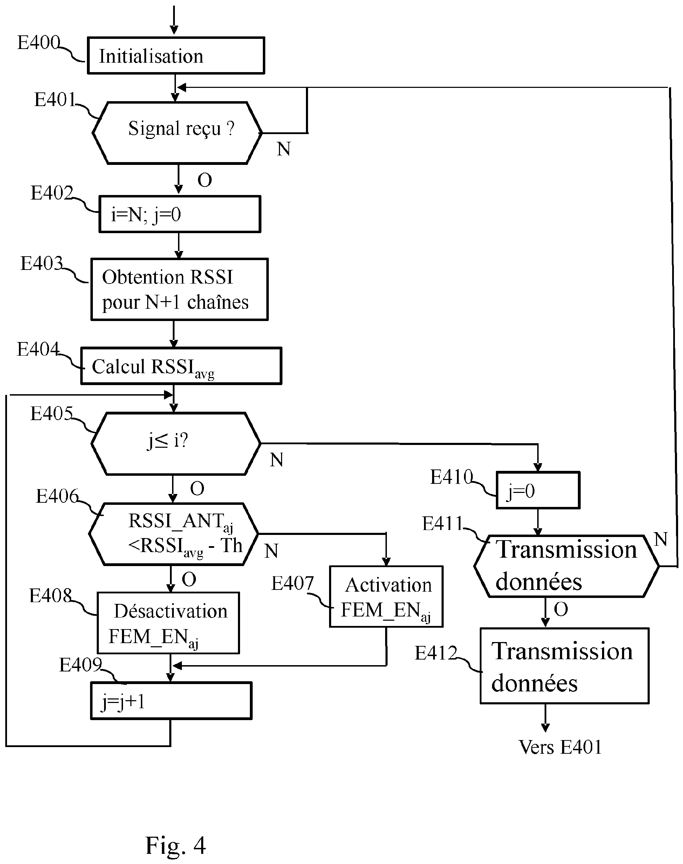

Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le dispositif de communication comporte de la circuiterie électronique adaptée et configurée pour implémenter les comportements, algorithmes et étapes décrits ici. La Fig. 4 illustre schématiquement un exemple d'algorithme exécuté par un dispositif de communication.

Le présent algorithme est décrit dans un exemple dans lequel il est exécuté par le dispositif de communication 10a.

Il est à remarquer ici que, pour des raisons de rapidité de l'exécution du présent algorithme, le présent algorithme peut être exécuté par l'interface radio 305 du dispositif de communication 10a. Dans un autre mode de réalisation, le présent algorithme peut être exécuté par le processeur 301 en coopération avec un module frontal tel que le module frontal $200_{a0}$.

A l'étape E400, le présent algorithme est initialisé. Il est exécuté de manière itérative.

A l'étape E401, le dispositif de communication 10a vérifie si un signal émis par un autre dispositif de communication est reçu. Dans l'affirmative, le dispositif de communication 10a identifie le dispositif de communication ayant émis le signal reçu et passe à l'étape E402. L'identification est par exemple effectuée à partir de l'adresse MAC (de l'anglais Media Access control), ou BSSID ( de l'anglais Basic Service Set Identifier) pour un dispositif Wi-Fi, ou encore l'adresse IMEI ( de l'anglais *International Mobile Equipment Identity)* pour un équipement cellulaire. Dans la négative, le dispositif de communication 10a retourne à l'étape E401.

Dans un mode de réalisation, la vérification de la réception d'un signal émis par un autre dispositif de communication est remplacée par une temporisation par exemple égale à une seconde.

Dans un mode de réalisation, la vérification de la réception d'un signal émis par un autre dispositif de communication est remplacée par une vérification de la réception d'une trame de données prédéterminée telle que par exemple une trame de demande d'association au réseau de communication.

Il est à remarquer ici que les modes de réalisations susmentionnés peuvent aussi être combinés.

A l'étape E402, le dispositif de communication 10a initialise une variable notée i au nombre d'antennes dont dispose le dispositif de communication 10a, en l'occurrence N+1 pour le dispositif de communication 10a, et met une variable notée j à la valeur 0.

A l'étape E403, le dispositif de communication 10a obtient, pour chaque antenne, une mesure du niveau de puissance du signal reçu RSSI (acronyme de Received Signal Strength Indicator ou Received Signal Strength Indication en anglais).

Le dispositif de communication 10a obtient de chaque antenne $Ant_{a0}$ à $Ant_{aN}$ respectivement une mesure du niveau de puissance du signal reçu RSSI_$Ant_{a0}$ à RSSI_$Ant_{aN}$.

En fonction des caractéristiques du canal de propagation lié à chaque chaîne de réception comprenant le diagramme et la polarisation de son antenne associée, les niveaux de RSSI des différentes chaînes peuvent être très hétérogènes. Par exemple, dans le cas du système Wi-Fi, sa valeur peut varier dans la gamme d'environ -30dBm pour un signal reçu dans de très bonnes conditions d'un émetteur proche jusqu'à environ -98dBm pour un signal reçu très faiblement, par exemple d'un émetteur très éloigné ou dans des conditions de propagation très mauvaises.

Les mesures de RSSI fournissent une indication sur les performances des canaux de propagation correspondants, car, le dispositif de communication distant émet avec une puissance homogène vers chacun de ces canaux. Le niveau reçu en local par chacune des antennes reflète directement l'atténuation du canal de propagation correspondant.

Le canal étant par définition symétrique, ses caractéristiques de propagation vers le dispositif de communication distant peuvent être déduites directement du niveau RSSI correspondant.

Par exemple, le dispositif de commande effectue, pour obtenir les mesures de RSSI de la dernière trame reçue de l'interface Radio 305 une commande « wl sta_info <xx:xx:xx:xx:xx:xx> », où <xx:xx:xx:xx:xx:xx> désigne l'adresse MAC du dispositif, et peut obtenir le résultat suivant :
"per antenna rssi of last rx data frame: -73 -83 -71 -71", où les valeurs numériques représentent le RSSI en dBm pour chacune des antennes.

A l'étape suivante E404, le dispositif de communication calcule une moyenne $RSSI_{avg}$ des valeurs des mesures de niveau de puissance des signaux reçus RSSI $Ant_{a0}$ à RSSI_$Ant_{aN}$.

A l'étape suivante E405, le dispositif de communication 10a vérifie si la valeur de la variable j est inférieure ou égale à la valeur de la variable i.

Dans l'affirmative, le dispositif de communication 10a passe à l'étape E406. Dans la négative, le dispositif de communication 10a retourne à l'étape E401 pour recommencer l'écoute du canal.

A l'étape E406, le dispositif de communication 10a vérifie si la mesure du niveau de puissance reçue RSSI_$Ant_{aj}$ est strictement inférieure à un seuil de décision déterminé à partir d'au moins une partie des mesures de niveaux de puissance de signaux reçus.

Par exemple, le seuil de décision est la moyenne $RSSI_{avg}$ des valeurs des mesures de niveau de puissance des signaux reçus RSSI_$Ant_{a0}$ à RSSI_$Ant_{aN}$ minorée d'une seuil noté Th. Le seuil Th est par exemple égal à 10 dB. Il est à noter ici que la valeur du seuil Th peut être modifiée selon certaines conditions explicitées par la suite.

Par exemple, la partie des mesures de niveaux de puissance de signaux reçus utilisée pour déterminer le seuil de décision comprend un nombre prédéfini de mesures de niveaux de puissance de signaux reçus les plus élevées parmi les mesures de niveaux de puissance des signaux reçues.

Par exemple, le nombre prédéfini est égal à au moins un.

Par exemple, le dispositif de commande effectue, pour obtenir la moyenne de RSSI de l'interface Radio 305, la commande « wl sta_info <xx:xx:xx:xx:xx:xx> », où <xx:xx:xx:xx:xx:xx> désigne l'adresse MAC du dispositif, peut produire le résultat suivant :
"per antenna average rssi of rx data frames: -73 -83 -71 -71", où les valeurs numériques représentent le RSSI en dBm pour chacune des antennes.

Si la différence entre ces valeurs RSSI est très importante, la chaîne de réception qui reçoit moins d'énergie peut donc être considérée comme étant non-contributrice pour le dispositif de communication distant identifié à partir de l'adresse MAC ou le BSSID ou le IMEI et le module frontal peut être désactivé lors de la prochaine transmission vers le dispositif de communication ayant émis le signal reçu à l'étape E401.

Une des manières d'identifier les chaînes non-contributrices est de calculer la différence entre le RSSI de chaque chaîne de réception et le RSSI moyen de toutes les chaînes de réception.

La moyenne de RSSI est par exemple calculée en unité Watt. Si le RSSI est exprimé en dBm, il est alors nécessaire de le convertir en Watt.

Ensuite, le RSSI de chaque antenne est comparé à la moyenne des RSSI. Si la différence dépasse un seuil prédéfini, la chaîne correspondante sera identifiée comme non-contributrice.

En effet, la contribution d'une des chaînes de réception à la reconstruction du signal transmis par l'émetteur distant sera d'autant plus faible que le niveau de signal reçu par cette chaîne est faible.

Prenons par exemple un cas dans lequel le dispositif de communication 10a comporte quatre antennes $Ant_{a0}$ à $Ant_{a3}$.

Les mesures des valeurs de RSSI de la dernière trame reçue sont évaluées pour chacune des antennes à respectivement $RSSI\_Ant_{a0}$ = -73 dBm, $RSSI\_Ant_{a1}$ = -83 dBm, $RSSI\_Ant_{a2}$= -71 dBm et $RSSI\_Ant_{a3}$=-71 dBm.

Pour obtenir le seuil de décision déterminé à partir d'au moins une partie des mesures de niveaux de puissance des signaux reçus, il peut être procédé ainsi :

- $RSSI\_Ant_{a0}$ = -73 dBm, soit 50 nW
- $RSSI\_Ant_{a1}$ = -83 dBm, soit 5 nW
- $RSSI\_Ant_{a2}$ = -71 dBm, soit 79 nW
- $RSSI\_Ant_{a3}$ = : -71 dBm, soit 79 nW
- $RSSI_{avg}$ = somme des RSSI des antennes $Ant_{a0}$ à $Ant_{a3}$ divisée par le nombre d'antennes :

  ◦ $RSSI_{avg}$ = 53 nW, soit -72,7 dBm

-

$$\text{Seuil de décision} = RSSI_{avg} - Th = -72.7 \text{ dBm} - 10 \text{ dB} = -82{,}7 \text{ dBm}$$

L'étape 406 compare les RSSI de la dernière trame reçu au seuil :

- $RSSI\_Ant_{a0}$ : -73 dBm est supérieur au seuil de décision de -82,7 dBm
- $RSSI\_Ant_{a1}$ : -83 dBm est inférieur au seuil de décision
- $RSSI\_Ant_{a2}$ : -71 dBm est supérieur au seuil de décision
- $RSSI\_Ant_{a3}$ : -71 dBm est supérieur au seuil de décision Dans cet exemple, il apparaît que la chaine de l'antenne $Ant_{a1}$ est identifiée comme non-contributrice.

Dans cet exemple, il est considéré que le dispositif de communication10a comprend 4 antennes, chacune associée à un module frontal. Dans d'autres exemples, un dispositif de communication disposant d'un nombre différent d'antennes et de modules frontaux peut mettre en oeuvre un ou plusieurs modes de réalisation :

- dispositif de communication comprenant 2 antennes ;
- dispositif de communication comprenant 3 antennes ;
- dispositif de communication comprenant 6 antennes ;
- dispositif de communication comprenant 8, 16, 64 antennes ;
- etc.

Selon une variante de réalisation, la valeur du seuil Th dépend du type de modulation utilisée pour la prochaine transmission ou du schéma MIMO mis en oeuvre, ou du niveau moyen de RSSI lorsqu'il est supérieur à un seuil déterminé correspondant par exemple à d'excellentes conditions de propagation, ou par exemple à de très mauvaises conditions de propagation.

Dans un exemple, la valeur du seuil Th est choisie proche de 3 dB, c'est-à-dire que le seuil Th est représentatif d'une identification d'une antenne non-contributrice lorsque celle-ci reçoit un signal avec 2 fois moins d'énergie ou de puissance que la moyenne des énergies ou puissances des signaux reçus par toutes les antennes. Dans un autre exemple, la valeur du seuil est choisie proche de 15 dB. Encore dans un autre exemple, la valeur du seuil Th est choisie dans l'intervalle ]0 dB, 20 dB].

Dans l'affirmative, le dispositif de communication 10a passe à l'étape E408. Dans la négative, le dispositif de communication 10a passe à l'étape E407.

A l'étape E407, le dispositif de communication 10a commande, pour la prochaine transmission d'une trame de données à destination du dispositif de communication ayant émis les signaux reçus à l'étape E401, l'activation du signal $FEM\_EN_{aj}$. En d'autres termes, le dispositif de communication active ou maintient l'alimentation en énergie électrique du module frontal $200_{aj}$ pour la prochaine transmission d'une trame de données à destination du dispositif de communication ayant émis les signaux reçus à l'étape E401.

Cette opération effectuée, le dispositif de communication passe à l'étape E409.

A l'étape E408, le dispositif de communication 10a commande, pour la prochaine transmission d'une trame de données à destination du dispositif de communication ayant émis les signaux reçus à l'étape E401, la désactivation du signal FEM_EN$_{aj}$. En d'autres termes, le dispositif de communication désactive l'alimentation en énergie électrique du module frontal 200$_{aj}$ pour la prochaine transmission d'une trame de données à destination du dispositif de communication ayant émis les signaux reçus à l'étape E401.

Par exemple, les commandes suivantes sont utilisées :

"wl txchain <xy>" qui permet le contrôle des chaînes à utiliser pour la transmission. "wl rxchain <xy>" qui permet le contrôle des chaînes à utiliser pour la réception. Selon une variante, la décision de désactivation est limitée à un seul module frontal parmi la pluralité de module frontaux, ou à deux modules frontaux.

Selon une autre variante, la décision de désactivation est prise selon le franchissement pour une antenne d'un seuil relatif à une autre antenne, par exemple par rapport à la meilleure antenne, ou par rapport aux deux meilleures.

Selon encore une autre variante, la décision de désactivation porte sur la désactivation d'une seule antenne parmi la pluralité d'antennes excluables, par exemple la plus mauvaise, ou les deux plus mauvaises.

Selon une autre alternative, le nombre maximum de modules frontaux pouvant être désactivés est dépendant de la modulation utilisée pour l'émission de la prochaine trame de données.

A l'étape suivante E409, le dispositif de communication 10a incrémente la variable j d'une unité et retourne à l'étape E405.

Ainsi, la commande suivante permet d'interrompre la fourniture en énergie électrique de la chaîne de transmission du mode frontal 200$_{a1}$ lors de la prochaine émission : "wl txchain 13"

13 = $(1101)_b \rightarrow$ le chiffre 0, en deuxième colonne, montre que la deuxième chaîne de transmission sera désactivée.

Cette opération effectuée, le dispositif de communication retourne à l'étape E401. Selon un mode particulier, pour l'émission des signaux de balise (beacon en anglais) à intervalles réguliers, la totalité des module frontaux est activée.

Dans un mode particulier de réalisation, l'algorithme tel que décrit est interrompu à intervalles réguliers pour permettre aux dispositifs de communication d'activer tous leurs canaux frontaux et ainsi de permettre la pleine évaluation des canaux de propagation en cas d'amélioration des conditions de propagation entre les deux dispositifs de communication. L'interruption, peut, par exemple être effectuée pour la transmission de cinq trames toutes les 5s.

## Revendications

**1.** Procédé de gestion d'une interface radio d'un dispositif de communication, l'interface radio comportant une pluralité d'antennes aptes à l'émission et la réception de trames de données, à chaque antenne étant associé un module frontal, chaque module frontal comportant une chaîne d'émission et une chaîne de réception de trames de données, **caractérisé en ce que** le procédé comporte les étapes de :

- obtention (E403), pour chaque antenne et le module frontal associé, d'une mesure du niveau de puissance reçue,
- comparaison (E406) de chaque niveau de puissance obtenu avec un seuil de décision déterminé à partir d'au moins une partie des mesures de niveaux de puissance de signaux reçues,
- si le niveau de puissance du signal reçu pour une antenne et le module frontal associé est inférieur au seuil de décision, désactivation (E408) du module frontal pour la transmission d'une trame de données.

**2.** Procédé selon la revendication 1, **caractérisé en ce que** le seuil de décision est déterminé à partir d'une moyenne des mesures de niveaux de puissance de signaux reçus minorée d'une valeur prédéfinie.

**3.** Procédé selon la revendication 2, **caractérisé en ce que** la valeur prédéfinie est dépendante du type de modulation utilisé pour le transfert d'une trame de données.

**4.** Procédé selon la revendication 1, **caractérisé en ce que** la partie des mesures de niveaux de puissance de signaux reçus pour déterminer le seuil de décision comprend un nombre prédéfini de mesures de niveaux de puissance de signaux reçus les plus élevées parmi les mesures de niveaux de puissance des signaux reçue.

**5.** Procédé selon la revendication 4, **caractérisé en ce que** le nombre prédéfini est égal à au moins 1

**6.** Procédé selon l'une quelconque des revendications 1 à 5, **caractérisé en ce que** la désactivation de modules frontaux est limitée au nombre total de modules frontaux minoré de un.

7. Procédé selon l'une quelconque des revendications 1 à 6, **caractérisé en ce qu'**un nombre maximum de modules frontaux pouvant être désactivés dépend du type de modulation utilisé pour la transmission de trames de données.

8. Procédé selon l'une quelconque des revendications 1 à 7, **caractérisé en ce que** le procédé est exécuté préalablement à la transmission de chaque trame de données pendant une durée prédéterminée.

9. Dispositif de gestion d'une interface radio d'un dispositif de communication, l'interface radio comportant une pluralité d'antennes aptes à l'émission et la réception de trames de données, à chaque antenne étant associé un module frontal, chaque module frontal comportant une chaîne d'émission et une chaîne de réception de trames de données, **caractérisé en ce que** le dispositif de gestion comporte :

- des moyens d'obtention, pour chaque antenne et le module frontal associé, d'une mesure du niveau de puissance reçue,
- des moyens de comparaison de chaque niveau de puissance obtenu avec un seuil de décision déterminé à partir d'au moins une partie des mesures de niveaux de puissance de signaux reçus,
- des moyens de désactivation d'un module frontal pour la transmission d'une trame de données si le niveau de puissance du signal reçu pour une antenne et le module frontal associé est inférieur au seuil de décision.

10. Produit programme d'ordinateur comportant des instructions pour implémenter, par un processeur, le procédé selon l'une quelconque des revendications 1 à 8, lorsque ledit programme est exécuté par ledit processeur.

11. Support de stockage d'informations stockant un programme d'ordinateur comprenant des instructions pour implémenter, par un processeur, le procédé selon l'une quelconque des revendications 1 à 8, lorsque ledit programme est lu et exécuté par ledit processeur.

10a

Dispositif de communication

Y Ant$_{a0}$

Y Ant$_{aN}$

10b

Ant$_{b0}$ Y

Ant$_{bM}$ Y

Dispositif de communication

10c

Ant$_{c0}$ Y

Ant$_{cK}$ Y

Dispositif de communication

Fig. 1

Fig. 2

Fig. 3

E400 — Initialisation

E401 — Signal reçu ? — N

O

E402 — i=N; j=0

E403 — Obtention RSSI pour N+1 chaînes

E404 — Calcul $RSSI_{avg}$

E405 — j≤ i? — N

E410 — j=0

O

E406 — $RSSI\_ANT_{aj} < RSSI_{avg} - Th$ — N

E407 — Activation $FEM\_EN_{aj}$

E411 — Transmission données — N

O

E408 — Désactivation $FEM\_EN_{aj}$

E412 — Transmission données

E409 — j=j+1

Vers E401

Fig. 4

**EP 4 475 454 A1**

Europäisches Patentamt
European Patent Office
Office européen des brevets

# RAPPORT DE RECHERCHE EUROPEENNE

Numéro de la demande

EP 24 18 0134

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 330 433 B1 (JAGER MICHAEL DAVID [GB]) 11 décembre 2001 (2001-12-11) * revendication 1; figures 2,3 * ----- | 1,3-11 | INV. H04B7/08 |
| X | US 2015/023400 A1 (DAS SAJAL KUMAR [IN] ET AL) 22 janvier 2015 (2015-01-22) * alinéas [0002], [0008], [0018] - [0021], [0025] - [0031], [0036] - [0040], [0048], [0057] - [0059]; figure 1 * ----- | 1,3-11 | |
| X | US 2020/112863 A1 (LI KAIPING [US] ET AL) 9 avril 2020 (2020-04-09) * alinéas [0031], [0032], [0037], [0039], [0043] * ----- | 1-3,6-11 | |
| | | | DOMAINES TECHNIQUES RECHERCHES (IPC) |
| | | | H04B |

Le présent rapport a été établi pour toutes les revendications

| Lieu de la recherche | Date d'achèvement de la recherche | Examinateur |
|---|---|---|
| Munich | 31 juillet 2024 | Panahandeh, Ali |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

14

## ANNEXE AU RAPPORT DE RECHERCHE EUROPEENNE
## RELATIF A LA DEMANDE DE BREVET EUROPEEN NO.

EP 24 18 0134

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-07-2024

| Document brevet cité au rapport de recherche | | Date de publication | Membre(s) de la famille de brevet(s) | | Date de publication |
|---|---|---|---|---|---|
| US 6330433 | B1 | 11-12-2001 | EP | 0798878 A2 | 01-10-1997 |
| | | | GB | 2311693 A | 01-10-1997 |
| | | | JP | H1032530 A | 03-02-1998 |
| | | | US | 6330433 B1 | 11-12-2001 |
| US 2015023400 | A1 | 22-01-2015 | US | 2015023400 A1 | 22-01-2015 |
| | | | WO | 2013087532 A1 | 20-06-2013 |
| US 2020112863 | A1 | 09-04-2020 | CN | 111010221 A | 14-04-2020 |
| | | | DE | 102019125698 A1 | 09-04-2020 |
| | | | US | 10455442 B1 | 22-10-2019 |
| | | | US | 2020112863 A1 | 09-04-2020 |
| | | | US | 2021185549 A1 | 17-06-2021 |

EPO FORM P0460

Pour tout renseignement concernant cette annexe : voir Journal Officiel de l'Office européen des brevets, No.12/82